# FASCICULE DE BREVET EUROPEEN

(11) **EP 1 265 336 B1**
(45) Date de publication et mention de la délivrance du brevet: **09.01.2019**
(21) Numéro de dépôt: 02291269.5
(22) Date de dépôt: 23.05.2002
(51) Int. Cl.: H02J 7/00

(54) **Procédé d'équilibrage pour batterie électrique soumise à un régime discontinu de recharge et système de gestion de batterie permettant la mise en oeuvre de ce procédé**
Ausgleichverfahren für eine elektrische Batterie im diskontinuierlichen Lade-Modus und Batterieverwaltungssystem zur Durchführung des Verfahrens
Equalisation method for an electric battery in a discontinuous recharging mode and battery management system for carrying out the same

(30) Priorité: 07.06.2001 FR 0107464
(43) Date de publication de la demande: 11.12.2002
(73) Titulaire: Saft Finance S.à.r.l., 1471 Luxembourg (LU)
(72) Inventeur: Perelle, Michel, 37210 Parcay-Meslay (FR)
(74) Mandataire: Hirsch & Associés

(56) Documents cités:
- FR-A- 2 796 503
- US-A- 3 493 837
- US-A- 4 238 721
- US-A- 4 614 905

## Description

L'invention concerne un procédé d'équilibrage pour batterie d'accumulateurs électriques, composée modulairement à l'aide d'éléments rechargeables interconnectés en série. Elle concerne aussi un système de gestion pour batterie destiné à être incorporé dans un agencement de recharge et d'équilibrage de batterie pour permettre l'exploitation du procédé évoqué ci-dessus.

Le procédé selon l'invention est plus particulièrement destiné à être mis en oeuvre dans les applications où une batterie est susceptible d'être soumise à un régime discontinu de recharge, par exemple parce qu'il n'est pas prévu un fonctionnement permanent du chargeur ou encore parce que la batterie n'est pas toujours électriquement reliée à un chargeur.

Le procédé et le système de gestion sont notamment destinés à être mis en oeuvre avec des batteries qui sont constituées chacune par association d'un nombre relativement élevé d'éléments en raison des quantités d'énergie à stocker. Comme il est connu, les éléments d'une même batterie, qui sont couramment prévus identiques, peuvent cependant présenter des caractéristiques et en conséquence des performances légèrement différentes. L'écart en matière de performances entre éléments d'une même batterie est susceptible d'augmenter de manière significative au cours du temps et au fur et à mesure des charges et décharges successives. Ceci peut conduire à une dégradation des éléments d'une batterie et à un fonctionnement imparfait de l'application que cette batterie alimente en énergie.

Les éléments en série d'une batterie sont le plus généralement traversés par un même courant, de charge ou de décharge. Toutefois l'équilibrage d'une batterie requiert qu'à certains moments les courants traversant ses divers éléments puissent être différents. Il est connu de décharger, à des fins d'équilibrage, un élément d'une batterie, au moyen d'un dispositif de dérivation individuel, qui vient se connecter en parallèle à lui, lorsque cet élément se trouve être trop chargé. Ce dispositif inclut par exemple une résistance exploitée à des fins de dissipation d'énergie. Un courant de dérivation ou "by-pass" circule alors au travers du dispositif et permet de réduire, voire de dériver totalement, le courant circulant dans l'élément. La capacité d'équilibrage Q pour un élément est proportionnelle au courant de dérivation I et à la durée pendant laquelle cette dérivation est réalisée. Il est donc possible d'obtenir un même équilibrage au niveau d'un élément avec un courant de dérivation important établi pendant un temps relativement court ou avec un courant de dérivation faible maintenu pendant un temps long. La première solution utilisée a été celle où un courant de dérivation important est prévu, car elle permet de réaliser un équilibrage en un temps réduit, ce qui est important, lorsque le temps disponible pour équilibrage se trouve être court. Il est par ailleurs connu de ne permettre l'établissement d'un courant de dérivation, au niveau d'un élément de batterie, qu'à partir du moment où une tension déterminée de seuil d'activation est atteinte aux bornes de cet élément. Le temps nécessaire, pour que cette tension de seuil soit atteinte, vient se soustraire du temps disponible pour l'équilibrage de la batterie. Plus le temps disponible pour l'équilibrage est court, plus les courants de dérivation relatifs aux éléments de batterie les plus chargés doivent être importants.

Un procédé connu met en oeuvre une batterie supervisée par une logique centralisée chargée d'assurer la commande des dispositifs de dérivation en fonction de relevés de tension effectués aux bornes des éléments auxquels ces dispositifs de dérivation sont individuellement associés. Il est prévu de collationner centralement les tensions présentes aux bornes des éléments de batterie, afin de déterminer celle qui est la plus haute. La logique centralisée rend actif le circuit de dérivation affecté à l'élément aux bornes duquel se trouve cette tension la plus haute. Ce procédé permet de réaliser un équilibrage dans lequel les courants de dérivation restent faibles, la durée d'un équilibrage pouvant être longue. Par contre, il présente l'inconvénient de nécessiter une centralisation relativement complexe qui implique un programme informatique dont la mise au point est relativement lourde. Ceci n'est qu'un inconvénient mineur dans le cas de batteries haute tension, par contre il existe de nombreuses applications n'impliquant que la présence de quelques éléments par batterie où il n'est pas souhaité mettre en oeuvre une telle solution, en particulier pour des raisons de coût, ce dernier pouvant être considéré comme pratiquement constant quel que soit le nombre d'éléments.

Il est par ailleurs connu d'utiliser la batterie en tampon entre un chargeur et une utilisation, dans les applications où une charge est alimentée de manière permanente, comme cela est classique dans le domaine des télécommunications, la batterie est alors maintenue en charge à tension constante, tant que le chargeur est alimenté. Dans un tel cas, il est possible de réaliser un équilibrage élément par élément qui commence doucement à partir d'une tension déterminée de seuil par élément et qui augmente avec la tension mesurée pour chaque élément. Un courant de dérivation important traduit une fin de charge pour l'élément de batterie concerné et sa détection est exploitée pour demander au chargeur de réduire la tension de régulation qu'il fournit à la batterie. Les charges des éléments de batterie tendent à s'équilibrer, puisque les courants de dérivation sont fonction des tensions respectivement mesurées aux bornes des différents éléments. Dans certaines applications et en particulier en télécommunications, le chargeur est alimenté la plupart du temps, ce qui permet de réaliser un équilibrage s'étendant au cours du temps avec de faibles courants de dérivation, de plus comme la batterie est en charge d'une manière qui est quasi-permanente, elle n'est pas déchargée par les courants de dérivation qui sont susceptible d'être établis au niveau des éléments qu'elle comporte. Toutefois le procédé ne convient pas bien, lorsqu'une recharge quasi-permanente d'une batterie par un chargeur n'est pas systématiquement réalisable. Dans ce cas, on retrouve les inconvénients présentés par la première solution connue qui sont liés au fait que le temps disponible pour équilibrage peut être court et que les courants de dérivation doivent alors être importants, et la batterie se décharge partiellement en phase d'équilibrage.

Le document FR-A-2 796 503 décrit un procédé de charge de plusieurs cellules électrochimiques connectées en série, à un chargeur. La tension de chaque cellule est détectée en permanence. Lorsqu'une cellule a atteint un seuil de tension prédéterminé, un incrément au courant de charge est appliqué et une résistance de dérivation d'un courant équivalent à l'incrément du courant de charge des cellules est branchée en parallèle à cette cellule.

L'invention propose donc un procédé d'équilibrage pour batterie électrique, composée d'une pluralité d'éléments montés en série, dont la recharge s'effectue au moyen d'un dispositif de charge, sous le contrôle d'un système de gestion. Ce système associe un circuit de dérivation de courant individuel, en parallèle à chaque élément, ce circuit étant activé, lorsque la tension aux bornes de l'élément dépasse une valeur de seuil minimal d'équilibrage commune pour tous les éléments.

Selon l'invention, le procédé prévoit de diminuer la décharge des éléments de batterie pour équilibrage, quand la batterie n'est plus alimentée par un dispositif de charge.

Selon l'invention, le procédé prévoit plus particulièrement de substituer à la tension de seuil minimal d'équilibrage, une tension de seuil d'équilibrage plus élevée, à partir du moment où la batterie n'est plus alimentée par le dispositif de charge depuis un temps supérieur à une temporisation de valeur déterminée. Ceci permet d'éviter une décharge inappropriée de la batterie, alors qu'elle n'est pas en charge, tout en autorisant un rééquilibrage des éléments éventuellement les plus chargés.

Le procédé selon l'invention s'applique plus particulièrement dans le cadre d'un système de gestion qui inclut une chaîne de contrôle pour fournir en permanence un signal, de type tout ou rien, constitué par un courant circulant entre les bornes d'extrémité de la batterie au travers d'une série de portes de contrôle de transmission respectivement affectées chacune à un élément. Chaque porte est supposée commandée de manière à interrompre le passage du courant de la chaîne de contrôle, lorsque la tension aux bornes de l'élément, auquel elle est affectée, dépasse une valeur de seuil maximal de tension, toute interruption du courant se traduisant par un signal de commande de commutation transmis au dispositif de charge par l'intermédiaire d'une interface de contrôle commune

Le procédé, selon l'invention, prévoit alors une substitution à la tension de seuil minimal d'équilibrage d'une tension de seuil d'équilibrage plus élevée après un temps supérieur à une temporisation de valeur déterminée, en réponse à l'interruption du courant circulant dans la chaîne de contrôle. Il est ainsi possible d'obtenir la mise en oeuvre du procédé selon l'invention, de manière particulièrement économique.

Selon une forme particulière de mise en oeuvre de l'invention, il est prévu de compter le temps pendant lequel le courant circule dans la chaîne de contrôle pour commander une incrémentation par paliers prédéterminés de la tension fournie par le dispositif de charge à la batterie, ainsi que le temps s'écoulant après une interruption dudit courant pour commander une décrémentation par paliers prédéterminés de la tension fournie par le dispositif de charge à la batterie.

L'invention propose aussi un système de gestion pour agencement de recharge et d'équilibrage d'une batterie composée d'éléments rechargeables montés en série et destinée à être alimentée par un dispositif de charge apte à fournir au moins une tension de régulation constante pour la charge de la batterie.

Ce système de gestion comporte:
- une interface individuelle par élément de batterie, cette interface incluant :
   -- un premier montage de mesure de tension relié aux bornes de l'élément pour commander un circuit de dérivation de courant monté en parallèle à lui, afin de permettre de dériver au moins une partie du courant de charge qui lui est fourni, lorsque la tension mesurée aux bornes de cet élément s'élève au-dessus d'une valeur de seuil minimal d'équilibrage;
   --un second montage de mesure de tension pour déterminer le dépassement d'une valeur de seuil maximal aux bornes de l'élément, à partir d'une mesure de tension effectuée aux bornes d'une résistance de mesure en série avec le dispositif de dérivation de l'interface entre les bornes de l'élément;
   -- un circuit constituant une porte de contrôle de transmission, à fonction logique ET, combinant binairement un signal reçu par l'interface au niveau d'une borne d'entrée et un signal produit par ledit second circuit de mesure de l'interface, de manière à produire un signal résultant, de type tout ou rien, au niveau d'une borne de sortie de l'interface, ledit signal résultant correspondant à un courant, lorsque le signal reçu est lui-même constitué par un tel courant et que la tension mesurée par le second montage de mesure est inférieure à ladite valeur de seuil maximal;
- une interface commune placée en sortie d'une chaîne de contrôle et reliée à l'une des bornes d'extrémité de la batterie au travers des portes de transmission interconnectées en série des interfaces individuelles, pour agir sur le dispositif de charge, en cas d'interruption du courant résultant qui est transmis par l'intermédiaire des portes de contrôle de transmission des interfaces individuelles, quand au moins une des tensions mesurées aux bornes des éléments de la batterie dépasse la valeur de seuil maximal et que la chaîne de contrôle est ininterrompue, pour cette raison ou pour une autre.

Selon une caractéristique de l'invention, ledit agencement comporte un organe de commutation monté entre une borne d'extrémité de la batterie et la borne d'entrée de l'interface individuelle située en tête de chaîne de contrôle et affectée à l'élément relié à cette borne d'extrémité, de manière à pouvoir interrompre le courant résultant qui circule au travers de la chaîne de contrôle. Il comporte aussi un premier montage de mesure au niveau de chaque interface individuelle qui incorpore un moyen permettant de substituer une valeur de seuil d'équilibrage plus élevée que la tension de seuil minimal d'équilibrage, lorsque le courant circulant, au travers de la chaîne de contrôle, est interrompu.

Selon l'invention, le système de gestion comporte aussi un moyen de temporisation qui est associé à l'organe de commutation de manière à retarder l'interruption du courant circulant au travers de la chaîne de contrôle pendant un temps déterminé, après l'arrêt de la fourniture de la charge à la batterie par le chargeur.

Selon l'invention, l'interface de contrôle commune, permet de piloter la charge de la batterie et comporte, à cet effet, un dispositif de comptage de temps pour commander une commutation par paliers de la tension fournie par le dispositif de charge à la batterie, cette tension étant incrémentée par paliers, lorsque l'interface commune reçoit le courant circulant dans la chaîne de contrôle, et étant décrémentée par paliers avec un rythme préférablement plus rapide, lorsque le courant circulant dans la chaîne de contrôle est interrompu.

L'invention, ses caractéristiques et ses avantages sont précisés dans la description qui suit en liaison avec les figures évoquées ci-dessous.
La figure 1 présente un schéma de principe d'un agencement incluant un dispositif de charge et un système de gestion qui permettent la recharge et l'équilibrage d'une batterie en mettant en oeuvre le procédé d'équilibrage selon l'invention.
La figure 2 présente un diagramme relatif au fonctionnement d'une interface individuelle pour système de gestion d'un agencement de recharge et d'équilibrage selon l'invention.

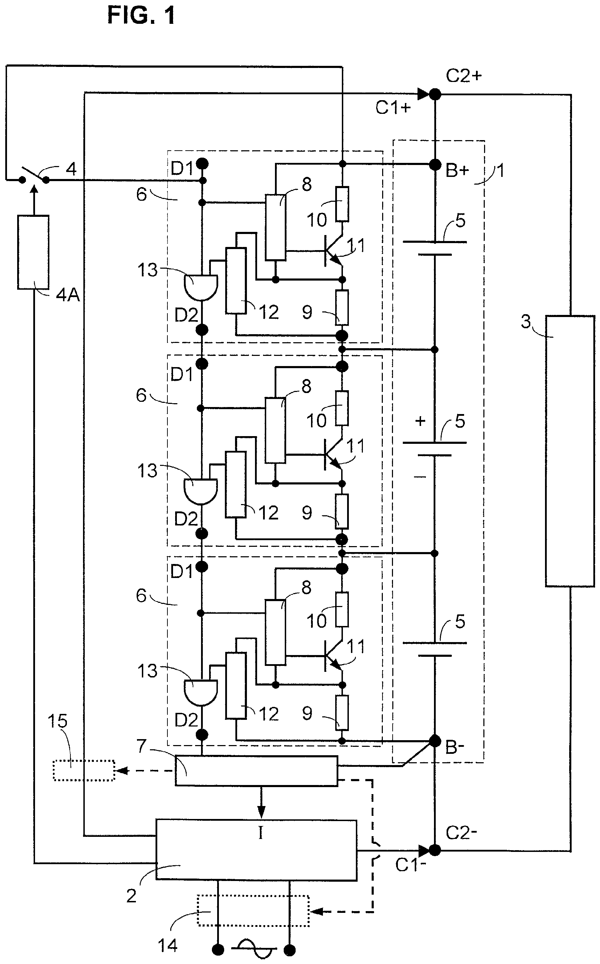

Le schéma proposé sur la figure 1 montre un agencement permettant la recharge et l'équilibrage d'une batterie électrique 1 à laquelle sont associés un dispositif 2, permettant la charge de la batterie à partir d'une source, non représentée, et un circuit d'utilisation 3 qu'il est prévu de pouvoir alimenter par la batterie.

La batterie est par exemple une batterie d'alimentation équipant un véhicule automobile disposant d'équipements électriques et, le cas échéant, d'un moteur électrique de propulsion. Cette batterie est composée de manière modulaire et constitue un ensemble regroupant une suite de modules montés en série. Chaque module est constitué par au moins un élément rechargeable 5. Pour des raisons de simplification de l'exposé, il n'est fait état que d'un seul élément rechargeable par module dans le reste de la demande, étant entendu que l'invention peut éventuellement être mise en oeuvre avec des modules à plusieurs éléments.

La batterie 1, qui est représentée, comporte deux bornes d'extrémité B+ et B- entre lesquelles trois éléments rechargeables 5 sont disposés en série, ces éléments sont par exemple des éléments de type Lithium-Ion.

Le dispositif de charge 2 est par exemple alimenté en énergie électrique par l'intermédiaire d'un réseau électrique de distribution ou d'un générateur électrique indépendant. Ce générateur est éventuellement un générateur monté dans un véhicule. Dans le type d'application envisagé ici, il est plus particulièrement considéré que la recharge de la batterie est susceptible de s'effectuer de manière discontinue, dans la mesure où elle risque d'être temporairement interrompue.

Dans l'exemple proposé le dispositif de charge 2 se raccorde aux bornes d'extrémité d'une batterie à charger par l'intermédiaire d'organes de connexion, symbolisés sous les références C1+ et C1-. Il est par ailleurs supposé que le circuit d'utilisation 3, que la batterie 1 doit permettre d'alimenter, vient se raccorder à la batterie par l'intermédiaire d'organes de connexion symbolisés sous les références C2+ et C2-. Les organes de connexion qui sont susceptibles d'être de type connu, ne sont donc pas détaillés ici.

La recharge de la batterie 1 au moyen du dispositif de charge 2 peut éventuellement être réalisée pendant que le circuit d'utilisation 3 est alimenté, si besoin est, le dispositif de charge et le circuit d'alimentation étant alors simultanément reliés aux bornes d'extrémité de la batterie.

Il est prévu que, de manière connue, chaque élément 5 soit équipé d'un circuit de dérivation monté en parallèle à lui. Chaque circuit permet de dériver au moins une partie du courant qui est fourni à la batterie par le dispositif de charge et qui circule dans un élément 5, lorsque la tension mesurée aux bornes de cet élément s'élève au-dessus d'une valeur déterminée de seuil minimal d'activation de l'équilibrage.

Dans la forme de réalisation proposée, le circuit de dérivation affecté à chaque élément 5 d'une batterie est incorporé dans une interface individuelle 6 qui est associée à cet élément. Il est prévu une interface commune 7 à laquelle les interfaces individuelles sont communément reliées par une liaison en chaîne, dit chaîne de contrôle, dans un système dit de gestion de batterie.

Le circuit de dérivation que comporte chaque interface individuelle fonctionne par exemple selon le principe décrit dans le brevet européen 0121547 qui est succinctement évoqué ci-dessous.

Un montage de mesure de tension 8 est affecté à chaque élément 5 aux bornes duquel il est relié, via une résistance de mesure 9 qui est connectée à la borne négative de cet élément. Ce montage 8 commande la mise en circuit d'une branche de dérivation qui est constituée par une résistance 10 et un transistor 11 et qui est montée en série avec la résistance de mesure 9, entre les bornes de l'élément 5 auquel le montage est affecté. Dans l'exemple de réalisation proposé, il n'y a pas de courant passant au travers de la branche de dérivation propre à un élément 5, tant que la tension v évaluée par le montage de mesure 8 aux bornes de cet élément n'a pas atteint une valeur déterminée de seuil minimal d'activation d'équilibrage V1. Ce montage de mesure 8 commande le transistor 11 de manière à ce qu'il dérive une partie du courant fourni par le dispositif de charge à l'élément 5, dès que la tension v mesurée a dépassé la valeur de seuil V1. Le courant dérivé augmente progressivement en fonction de l'augmentation de la tension image v qui est évaluée par l'intermédiaire d'un montage de mesure 8 et qui reflète l'augmentation progressive de la tension aux bornes de l'élément 5 surveillé par ce montage de mesure.

Selon l'invention, il est prévu un moyen permettant d'imposer l'une ou l'autre de deux valeurs de seuil minimal d'équilibrage V1 et V1' à chaque montage de mesure 8.

La valeur de seuil V1 est plus particulièrement destinée à être prise en compte, lorsque la batterie est alimentée par le dispositif de charge 2.

La valeur V1', choisie plus élevée que la valeur V1, est prise en compte à partir du moment où la batterie n'est plus alimentée par le dispositif de charge depuis un temps supérieur à une temporisation de valeur déterminée T. Elle est également prise en compte par tout élément 5 se trouvant entre l'interface commune 7 et un autre élément 5 qui est situé en amont de lui par rapport à cette interface et qui a atteint une valeur déterminée de seuil maximal de tension V2 en fin de charge, identique pour tous les éléments de cette batterie.

Dans l'exemple proposé, un organe de commutation 4 à commande temporisée est prévu pour permettre de faire basculer simultanément, d'une valeur de seuil d'activation à l'autre, l'ensemble des montages de mesure 8 affectés aux éléments 5 d'une batterie. Cet organe de commutation 4 est commandé en fonction de l'état de marche ou d'arrêt du dispositif de charge 2. Lorsque le dispositif de charge 2 est à l'état de marche et alimente la batterie, l'organe de commutation 4 est commuté de manière à imposer la valeur de seuil minimal d'équilibrage V1 qui est la plus basse. Lorsque le dispositif de charge passe à l'état d'arrêt, l'organe de commutation 4 est commuté de manière à imposer la valeur de seuil V1', après écoulement d'un temps égal à la temporisation T. Dans l'exemple proposé, ceci est symbolisé par l'interposition d'un organe de temporisation 4A entre le dispositif de charge 2 et l'organe de commutation 4 qui prend en compte un signal caractéristique de marche/arrêt produit au niveau du dispositif et qui agit sur le circuit de commande de l'organe de commutation. Cet organe de temporisation 4A peut être réglable, c'est éventuellement un composant indépendant; alternativement, il peut être inclus dans un circuit de commande, non représenté, du dispositif de charge 2 ou de l'organe de commutation 4.

D'une manière générale, chaque interface individuelle 6 comporte un second montage de mesure de tension 12 qui est agencé pour fournir à l'interface commune 7 une indication, de type binaire, relative à la tension présente aux bornes de l'élément rechargeable 5 de batterie 1 qu'il surveille. Cette tension correspond à la somme de la tension présente aux bornes de la résistance 9 avec celle des tensions V1 ou V'1, alors imposée, à partir du moment où ladite tension imposée est atteinte en phase de recharge. La fin de recharge est alors contrôlée par une tension qui se trouve être une image du courant circulant dans la résistance 9, étant entendu qu'il a passage de courant au travers de cette résistance dès que la tension imposée a été atteinte aux bornes de l'élément rechargeable surveillé.

Il n'y a de courant en circulation dans la résistance 9 qu'à partir du moment où la tension aux bornes de l'élément 5 est au moins égale à la valeur de tension V1 ou V'1 imposée.

L'indication relative à la tension aux bornes d'un élément qui est fournie par une interface individuelle, correspond à un signal binaire de niveau zéro, lorsque la tension aux bornes de l'élément 5 dépasse la valeur de seuil maximal V2 et à un signal binaire de niveau un, tant que ce seuil n'est pas atteint. La valeur V2 est choisie inférieure ou au plus égale à la tension maximale Vm admissible aux bornes d'un des éléments rechargeables qui constitue la batterie 1, les valeurs de tension V2 et Vm étant fixées en fonction de la nature des éléments 5 qui constituent cette batterie. L'indication fournie par un montage de mesure 12 est transmise de l'interface individuelle 6 qui contient ce montage vers l'interface commune 7 par l'intermédiaire d'un circuit qui constitue une porte de contrôle de transmission 13 propre à cette interface individuelle et qui a une fonction logique de type ET.

Dans une forme préférée de réalisation, le système de gestion de batterie comporte une chaîne de contrôle monofilaire qui fournit en permanence une indications binaire, sous la forme d'un signal de type tout ou rien constitué par un courant circulant entre les bornes de la batterie au travers de l'interface commune et des portes de contrôle de transmission 13 des interfaces individuelles respectivement affectées aux éléments de batterie. Ces portes 13 sont montées en série, chacune d'elles permet d'interrompre le passage du courant circulant dans la chaîne de contrôle monofilaire, lorsque la tension aux bornes de l'élément auquel elle est affectée dépasse la valeur de seuil maximal V2. L'interface commune permet de contrôler la présence du courant, d'en détecter les interruptions et d'agir en conséquence sur le processus de recharge.

Dans l'exemple présenté, la chaîne de contrôle est obtenue par mise en série des interfaces individuelles 6 qui comportent chacune une borne d'entrée de chaîne D1 et une borne de sortie de chaîne D2 entre lesquelles est positionnée la porte de transmission 13 de l'interface.

Chaque porte de contrôle de transmission 13 comporte pratiquement une première entrée par l'intermédiaire de laquelle elle reçoit l'indication relative au dépassement de valeur de seuil maximal fournie par le montage de mesure 12 de l'interface individuelle qui la comporte et une seconde entrée, dite de chaînage. L'entrée de chaînage d'une porte de contrôle de transmission d'une interface individuelle est reliée à la sortie de la porte de contrôle transmission qui la précède dans la chaîne de contrôle, l'entrée de chaînage de l'interface située en tête de chaîne est reliée à la borne d'extrémité B+ de la batterie par l'intermédiaire de l'organe de commutation 4.

Le courant constituant le signal transmis au travers de la chaîne de contrôle est normalement reçu par chaque porte de contrôle de transmission au niveau de son entrée de chaînage, sauf s'il est interrompu en amont de cette porte. Chaque porte est agencée pour créer une interruption de courant, lorsqu'une indication de dépassement de valeur de seuil maximal V2 lui est fournie au niveau de sa première entrée par le montage de mesure 12 de l'interface individuelle qui la comporte.

Le courant circulant dans la chaîne passe au travers de l'organe de commutation 4 tant que celui-ci est commandé à l'état passant, c'est à dire lorsque la batterie 1 est alimentée par le dispositif de charge 2, ainsi que pendant la temporisation T qui suit un passage à l'arrêt de ce dispositif de charge et en cas de demande expresse de fermeture de ce dispositif. Il se maintient si aucune interruption n'est créée par une porte de contrôle de transmission ou par une rupture de chaîne. La solution proposée permet également d'agir sur le dispositif de charge en cas de rupture de continuité de chaîne, de la même manière qu'en cas de dépassement de la valeur de seuil maximal V2. Dans le cadre de l'invention, une telle rupture de chaîne peut être créée par le passage de l'organe de commutation 4 de l'état passant à l'état bloquant, cette rupture étant prévue un temps T après l'arrêt du dispositif de charge 2.

L'interface commune 7 est reliée au dispositif de charge 2, comme symbolisé par la liaison qui relie cette interface à une entrée de commande I du chargeur. Elle est prévue pour agir par envoi d'un signal de commutation caractéristique au niveau d'une fonction de commutation incorporée à ce dispositif 2 ou éventuellement associée à lui, comme symbolisé par un montage 14, montré inséré dans le circuit d'alimentation en énergie du dispositif de charge 2, ou encore par un montage 15 monté dans le circuit de recharge reliant la batterie au dispositif.

Il est par ailleurs envisagé de permettre la recharge des éléments de la batterie à l'aide d'un dispositif de charge, qui permet de faire évoluer par paliers la tension appliquée à la batterie pour sa recharge. L'interface commune 7 comporte alors un dispositif de comptage lui permettant de mesurer le temps pendant lequel elle reçoit un courant correspondant au signal binaire de niveau un, via la chaîne de contrôle, à partir du moment où un tel courant est reçu. Ce dispositif de comptage est agencé pour permettre d'agir au niveau de la fonction de commutation du dispositif de charge ou de l'ensemble l'associant à un montage 14 ou 15, afin de commander une succession de commutations de tension, lors d'une opération de recharge. Cette succession se traduit par une incrémentation par paliers prédéterminés de la tension fournie par le dispositif de charge à la batterie, tant que l'interface commune 7 reçoit le courant correspondant au signal binaire de niveau un qui circule dans la chaîne de contrôle. Une décrémentation par paliers de la tension fournie par le chargeur, peut être obtenue à partir d'une mesure du temps pendant lequel il n'y a plus de courant fourni à l'interface commune 7 par l'intermédiaire de la chaîne de contrôle en raison d'une interruption de cette chaîne et suite à une telle interruption. Dans une forme préférée de réalisation, il est prévu une décrémentation rapide de la tension et une incrémentation lente.

Comme précédemment indiqué, il est prévu d'utiliser deux valeurs différentes de seuil V1 et V1' pour permettre un équilibrage optimal d'une batterie en tenant compte des conditions dans lesquelles cette batterie est placée. Si la batterie est en charge ou si elle vient d'être au moins partiellement rechargée, il est prévu de permettre une dérivation de courant au niveau de chaque élément de batterie à partir du moment où la tension aux bornes de cet élément est supérieure à celle des deux valeurs de seuil d'équilibrage qui est la plus basse, soit ici la valeur V1. Si la batterie n'est plus en charge depuis un temps supérieur à la temporisation T, il est prévu de permettre une dérivation de courant au niveau de chaque élément de batterie à partir du moment où la tension aux bornes de cet élément est supérieure à la valeur de seuil d'équilibrage V1' qui est la plus haute, de manière à n'assurer un équilibrage que pour les seuls éléments de batterie les plus chargés et en évitant de réduire improductivement la charge des autres éléments.

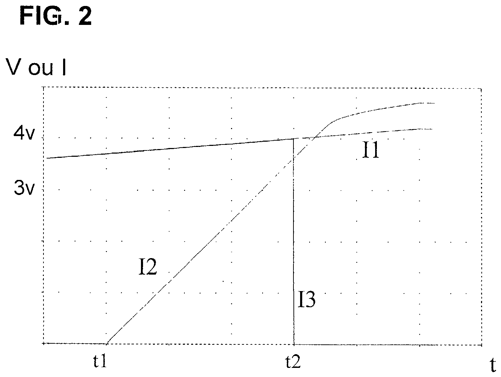

Durant une phase de recharge, la tension aux bornes de chaque élément 5 croît progressivement dans des conditions qui sont illustrées sur la figure 2 pour un élément Lithium-Ion dont la courbe de tension en phase de charge est référencée I1.

L'équilibrage pour un élément 5 se déclenche, lorsque la tension aux bornes de cet élément atteint la valeur de seuil V1 qui est supposée égale à 3,7 volts, au temps t1 sur la figure 2, et le courant d'équilibrage commence à croître linéairement, comme le montre la courbe de variation de courant d'équilibrage référencée I2. Si le courant circulant dans la chaîne de contrôle n'est pas interrompu par ailleurs, la charge d'un élément se poursuit jusqu'à l'instant t2 où la tension aux bornes de cet élément atteint la valeur de seuil maximal V2 à partir de laquelle l'interface individuelle de cet élément interrompt la circulation du courant circulant dans la chaîne, comme schématisé par la verticale référencée I3.

Cette interruption est exploitée par l'interface commune 7 qui agit en conséquence d'une manière prédéterminée sur le dispositif de charge, comme déjà indiqué plus haut.

Si pour cette raison ou encore pour une des raisons évoquées plus haut, la recharge de la batterie est interrompue et qu'en conséquence aucun courant n'est plus fourni, il y a cependant poursuite de l'équilibrage au niveau d'au moins les plus chargés des éléments de la batterie. Cet équilibrage se poursuit dans les conditions initiales, tant que l'organe de commutation 4 est maintenu passant par l'organe de temporisation 4A, soit donc pour chaque élément tant que la tension qu'il présente à ses bornes est supérieure à la valeur de seuil minimal V1. La consommation d'énergie de chaque interface individuelle en phase d'équilibrage peut alors être considérée comme correspondant pratiquement au courant d'équilibrage qui la traverse et qui provient de l'élément auquel elle est affectée.

A partir du moment où l'arrêt du courant de charge se poursuit au-delà d'un temps supérieur à la temporisation T, il y a interruption de la chaîne de contrôle au niveau de l'organe de commutation 4, si une telle interruption n'a pas eu lieu pour une des autres raisons mentionnées plus haut. Dès interruption de la chaîne de contrôle en amont d'une interface individuelle d'élément et quelle que soit sa cause, il y a substitution de la valeur de seuil V1' à la valeur de seuil minimal V1, au niveau de cette interface individuelle et de chacune des interfaces individuelles situées en aval, pour les raisons indiquées plus haut.

Dans un exemple de réalisation, il est prévu une temporisation T de l'ordre de quatre heures et des valeurs de seuil V1 et V1' respectivement égales à 3,7 volts et 3,9 volts. Lorsque la tension d'équilibrage imposée par élément est la valeur V1', il n'y a donc équilibrage que pour les seuls éléments de batterie qui présentent à leurs bornes une tension au moins égale à 3,9 volts. Ceci permet d'éviter de décharger la batterie d'une manière inappropriée, alors qu'elle n'est pas en charge et qu'il peut être judicieux de remettre à plus tard la réalisation d'un équilibrage plus approfondi et donc d'une décharge au niveau des éléments les moins chargés. Bien entendu, il est possible d'envisager que la temporisation puisse être modifiée en fonction des besoins par divers moyens connus qui ne seront pas développés ici.

Le système de gestion, selon l'invention, tel que décrit ci-dessus présente l'avantage de permettre un fonctionnement de la batterie en "floating", si cela est désiré à partir du moment où la charge de la batterie par le dispositif de charge est maintenue et où la commande de ce dispositif par l'interface commune est prévue pour le permettre. La tension d'équilibrage peut être maintenue à la valeur de seuil V1, la plus basse, par maintien de l'organe de commutation 4 à l'état passant sous le contrôle du dispositif de charge, via l'organe de temporisation.

Il est alternativement possible de réaliser un équilibrage, hors charge, pour ceux des éléments d'une batterie qui présentent une tension au moins égale à la valeur de seuil V1, la plus basse, entre leurs bornes respectives, la batterie se trouvant alors partiellement déchargée en fin d'équilibrage.

## Revendications

1. Procédé d'équilibrage pour batterie électrique (1), composée d'une pluralité d'éléments (5) montés en série dont la recharge s'effectue au moyen d'un dispositif de charge (2), sous le contrôle d'un système de gestion associant un circuit de dérivation de courant (6) individuel, en parallèle à chaque élément, lequel procédé comprend les étapes de:
a) charge de la batterie par le dispositif de charge ;
b) activation du circuit de dérivation de courant individuel lorsque la tension aux bornes d'un élément auquel le circuit de dérivation est associé, dépasse une valeur de seuil minimal d'équilibrage (V1) commune pour tous les éléments, sinon poursuite de la charge sans activation du circuit de dérivation de courant ;
c) interruption de la charge lorsque la tension d'un élément atteint une valeur de seuil maximal (V2) choisie inférieure ou au plus égale à une tension maximale (Vm) admissible aux bornes de l'élément, les valeurs de tension V2 et Vm étant fixées en fonction de la nature de l'élément et poursuite de l'activation du circuit de dérivation de courant individuel de l'étape b);
ledit procédé étant **caractérisé en ce qu'**à partir du moment où la batterie n'est plus alimentée par le dispositif de charge depuis un temps supérieur à une temporisation de valeur déterminée (T), le procédé prévoit une substitution à la tension de seuil minimal d'équilibrage (V1) d'une tension de seuil d'équilibrage plus élevée (V1') et l'activation du circuit de dérivation de courant individuel lorsque la tension aux bornes d'un élément est supérieure à ladite tension de seuil d'équilibrage (V1'), de manière à n'assurer un équilibrage que pour les seuls éléments de batterie les plus chargés et en évitant de réduire improductivement la charge des autres éléments.

2. Procédé d'équilibrage, selon la revendication 1, dans lequel le système de gestion inclut une chaîne de contrôle pour fournir en permanence un signal, de type tout ou rien, constitué par un courant circulant entre les bornes de la batterie au travers d'une série de portes de contrôle de transmission (13) respectivement affectées chacune à un élément, chaque porte étant commandée de manière à interrompre le passage du courant de la chaîne de contrôle, lorsque la tension aux bornes de l'élément, auquel elle est affectée, dépasse la valeur de seuil maximal de tension (V2), toute interruption du courant se traduisant par un signal de commande de commutation transmis au dispositif de charge par l'intermédiaire d'une interface de contrôle commune (7), ledit procédé d'équilibrage étant **caractérisé en ce qu'**il prévoit une substitution à la tension de seuil minimal d'équilibrage (V1) d'une tension de seuil d'équilibrage, plus élevée, (V1') après un temps supérieur à une temporisation de valeur déterminée (T), en réponse à l'interruption du courant circulant dans la chaîne de contrôle.

3. Procédé d'équilibrage, selon la revendication 2, dans lequel il est prévu de compter le temps pendant lequel le courant circule dans la chaîne de contrôle pour commander une incrémentation par paliers prédéterminés de la tension fournie par le dispositif de charge à la batterie, ainsi que le temps s'écoulant après une interruption dudit courant pour commander une décrémentation par paliers prédéterminés de la tension fournie par le dispositif de charge à la batterie.

4. Système de gestion pour agencement de recharge et d'équilibrage d'une batterie composée d'éléments rechargeables (5) montés en série et destinée à être alimentée par un dispositif de charge (2) apte à fournir au moins une tension de régulation constante pour la charge de la batterie, lorsque sont associés à la batterie (1) :
- une interface individuelle (6) par élément de batterie, cette interface incluant :
- un premier montage de mesure de tension (8) relié aux bornes de l'élément pour commander un circuit de dérivation de courant (10, 11) monté en parallèle à lui, afin de permettre de dériver au moins une partie du courant de charge qui lui est fourni, lorsque la tension mesurée aux bornes de cet élément s'élève au-dessus d'une valeur de seuil minimal d'équilibrage (V1);
- un second montage de mesure de tension (12) pour déterminer le dépassement d'une valeur de seuil maximal (V2) aux bornes de l'élément, à partir d'une mesure de tension effectuée aux bornes d'une résistance de mesure (9) en série avec le dispositif de dérivation de l'interface entre les bornes de l'élément;
- un circuit constituant une porte de contrôle de transmission (13), à fonction logique ET, combinant binairement un signal reçu par l'interface au niveau d'une borne d'entrée (E1) et un signal produit par ledit second circuit de mesure de l'interface, de manière à produire un signal résultant, de type tout ou rien, au niveau d'une borne de sortie (E2) de l'interface, ledit signal résultant correspondant à un courant, lorsque le signal reçu est lui-même constitué par un tel courant et que la tension mesurée par le second montage de mesure est inférieure à ladite valeur de seuil maximal (V2);
- une interface commune (7) placée en sortie d'une chaîne de contrôle et reliée à une des bornes d'extrémité de la batterie au travers des portes de transmission (13) interconnectées en série des interfaces individuelles, pour agir sur le dispositif de charge, en cas d'interruption du courant résultant qui est transmis par l'intermédiaire des portes de contrôle de transmission des interfaces individuelles, quand au moins une des tensions mesurées aux bornes des éléments de la batterie dépasse la valeur de seuil maximal (V2) et que la chaîne de contrôle est interrompue, pour cette raison ou pour une autre; ledit agencement étant **caractérisé en ce qu'**il comporte un organe de commutation (4) monté entre une borne d'extrémité de la batterie et la borne d'entrée (D1) de l'interface individuelle située en tête de chaîne de contrôle et affectée à l'élément (5) relié à cette borne d'extrémité, de manière à pouvoir interrompre le courant résultant qui circule au travers de la chaîne de contrôle, ainsi qu'un premier montage de mesure (8) au niveau de chaque interface individuelle qui incorpore un moyen permettant de substituer une valeur de seuil d'équilibrage (V1') plus élevée que la tension de seuil minimal d'équilibrage (V1), lorsque le courant circulant, au travers de la chaîne de contrôle, entre les bornes de batterie est interrompu.

5. Système de gestion, selon la revendication 4, dans lequel un moyen de temporisation (4A) est associé à l'organe de commutation (4) de manière à retarder l'interruption du courant circulant au travers de la chaîne de contrôle pendant un temps déterminé, après l'arrêt de la fourniture de la charge à la batterie par le chargeur.

6. Système de gestion, selon l'une des revendications 4 et 5, dans lequel l'interface de contrôle commune permet de piloter et comporte, à cet effet, un dispositif de comptage de temps pour commander une commutation par paliers de la tension fournie par le dispositif de charge à la batterie, cette tension étant incrémentée par paliers, lorsque l'interface commune reçoit le courant circulant dans la chaîne de contrôle, et étant décrémentée par paliers avec un rythme préférablement plus rapide, lorsque le courant circulant dans la chaîne de contrôle est interrompu.

## Patentansprüche

1. Ausgleichverfahren für eine elektrische Batterie (1), die aus mehreren in Reihe geschalteten Elementen (5) besteht, deren Wiederaufladung mittels einer Ladevorrichtung (2) unter der Kontrolle eines Verwaltungssystems erfolgt, das jedem Element eine zu ihm parallelgeschaltete individuelle Strombypassschaltung (6) zuordnet, wobei das Verfahren die Schritte umfasst:
a) Laden der Batterie durch die Ladevorrichtung;
b) Aktivierung der individuellen Strombypassschaltung, wenn die Spannung an den Klemmen eines Elements, dem die Bypassschaltung zugeordnet ist, einen minimalen Ausgleichschwellenwert (V1) überschreitet, der für alle Elemente gemeinsam ist; andernfalls Fortsetzung des Ladens ohne Aktivierung der Strombypassschaltung;
c) Abbruch des Ladens, wenn die Spannung eines Elements einen maximalen Schwellenwert (V2) erreicht, der kleiner oder höchstens gleich einer maximalen zulässigen Spannung (Vm) an den Klemmen des Elements gewählt ist, wobei die Spannungswerte V2 und Vm in Abhängigkeit von der Art des Elements festgelegt werden, und Fortsetzung der Aktivierung der individuellen Strombypassschaltung von Schritt b);
wobei das Verfahren **dadurch gekennzeichnet ist, dass** ab dem Zeitpunkt, zu dem die Batterie seit einer Zeit, die länger als eine Verzögerungszeit mit einem bestimmten Wert (T) ist, nicht mehr von der Ladevorrichtung gespeist wird, das Verfahren ein Ersetzen der minimalen Ausgleichschwellenwert-Spannung (V1) durch eine höhere Ausgleichschwellenwert-Spannung (V1') und die Aktivierung der individuellen Strombypassschaltung, wenn die Spannung an den Klemmen eines Elements größer als die Ausgleichschwellenwert-Spannung (V1') ist, vorsieht, so dass ein Ausgleich nur für die Batterieelemente allein sichergestellt wird, die am stärksten geladen sind, und vermieden wird, die Ladung der anderen Elemente auf unwirtschaftliche Weise zu verringern.

2. Ausgleichverfahren nach Anspruch 1, wobei das Verwaltungssystem eine Kontrollkette aufweist, um ständig ein EIN/AUS-Signal zu liefern, bestehend aus einem Strom, der zwischen den Klemmen der Batterie durch eine Reihe von Gattern zur Übertragungssteuerung (13) fließt, die jeweils einem Element zugeordnet sind, wobei jedes Gatter derart gesteuert wird, dass der Fluss des Stroms der Kontrollkette unterbrochen wird, wenn die Spannung an den Klemmen des Elements, dem es zugeordnet ist, den maximalen Spannungsschwellenwert (V2) überschreitet, wobei jede Unterbrechung des Stroms zu einem Umschaltsteuersignal führt, das über eine gemeinsame Kontrollschnittstelle (7) zu der Ladevorrichtung übertragen wird, wobei das Ausgleichverfahren **dadurch gekennzeichnet ist, dass** es in Reaktion auf die Unterbrechung des in der Kontrollkette fließenden Stroms ein Ersetzen der minimalen Ausgleichschwellenwert-Spannung (V1) durch eine höhere Ausgleichschwellenwert-Spannung (V1') nach einer Zeit, die länger als eine Verzögerungszeit mit einem bestimmten Wert (T) ist, vorsieht.

3. Ausgleichverfahren nach Anspruch 2, wobei vorgesehen ist, die Zeit zu messen, während der der Strom in der Kontrollkette fließt, um eine Inkrementierung der von der Ladevorrichtung an die Batterie gelieferten Spannung in vorbestimmten Stufen zu steuern, sowie die Zeit, die nach einer Unterbrechung dieses Stroms vergeht, um eine Dekrementierung der von der Ladevorrichtung an die Batterie gelieferten Spannung in vorbestimmten Stufen zu steuern.

4. Verwaltungssystem für eine Anordnung zur Wiederaufladung und zum Ausgleich einer Batterie, die aus in Reihe geschalteten wiederaufladbaren Elementen (5) besteht und dazu bestimmt ist, von einer Ladevorrichtung (2) gespeist zu werden, die in der Lage ist, wenigstens eine konstante Regelspannung für die Ladung der Batterie zu liefern, wenn der Batterie (1) zugeordnet sind:
- eine individuelle Schnittstelle (6) pro Batterieelement, wobei diese Schnittstelle aufweist:
- eine erste Spannungsmessanordnung (8), die mit den Klemmen des Elements verbunden ist, um eine Strombypassschaltung (10, 11) zu steuern, die zu ihm parallelgeschaltet ist, um zu ermöglichen, wenigstens einen Teil des Ladestroms, der ihm zugeführt wird, abzuleiten, wenn sich die an den Klemmen dieses Elements gemessene Spannung über einen minimalen Ausgleichschwellenwert (V1) hinaus erhöht;
- eine zweite Spannungsmessanordnung (12), um die Überschreitung eines maximalen Schwellenwertes (V2) an den Klemmen des Elements ausgehend von einer Spannungsmessung zu bestimmen, die an den Klemmen eines Messwiderstands (9) durchgeführt wird, der mit der Bypassvorrichtung der Schnittstelle zwischen den Klemmen des Elements in Reihe geschaltet ist;
- eine Schaltung, die ein Gatter zur Übertragungssteuerung (13) mit einer logischen Funktion UND bildet, das ein Signal, das durch die Schnittstelle an einer Eingangsklemme (E1) empfangen wird, und ein Signal, das von der zweiten Messschaltung der Schnittstelle erzeugt wird, binär kombiniert, so dass an einer Ausgangsklemme (E2) der Schnittstelle ein resultierendes EIN/AUS-Signal erzeugt wird, wobei dieses resultierende Signal einem Strom entspricht, wenn das empfangene Signal selbst aus einem solchen Strom besteht und die von der zweiten Messanordnung gemessene Spannung niedriger als der maximale Schwellenwert (V2) ist;
- eine gemeinsame Schnittstelle (7), die am Ausgang einer Kontrollkette angeordnet ist und mit einer der Endklemmen der Batterie über miteinander verbundene Übertragungsgatter (13) verbunden ist, die mit den individuellen Schnittstellen in Reihe geschaltet sind, um im Falle einer Unterbrechung des resultierenden Stroms, welcher über Gatter zur Übertragungssteuerung der individuellen Schnittstellen übertragen wird, wenn wenigstens eine der an den Klemmen der Elemente der Batterie gemessenen Spannungen den maximalen Schwellenwert (V2) überschreitet und die Kontrollkette aus diesem oder aus einem anderen Grund unterbrochen wird, auf die Ladevorrichtung einzuwirken;
wobei die Anordnung **dadurch gekennzeichnet ist, dass** sie ein Umschaltorgan (4) aufweist, dass zwischen einer Endklemme der Batterie und der Eingangsklemme (D1) der individuellen Schnittstelle, die sich am Anfang der Kontrollkette befindet und dem mit dieser Endklemme verbundenen Element (5) zugeordnet ist, angebracht ist, so dass es den resultierenden Strom unterbrechen kann, der durch die Kontrollkette fließt, sowie eine erste Messanordnung (8) an jeder individuellen Schnittstelle, welche ein Mittel enthält, das es ermöglicht, einen Ausgleichschwellenwert (V1') zu verwenden, der höher als die minimale Ausgleichschwellenwert-Spannung (V1) ist, wenn der Strom, der durch die Kontrollkette hindurch zwischen den Klemmen der Batterie fließt, unterbrochen wird.

5. Verwaltungssystem nach Anspruch 4, wobei dem Umschaltorgan (4) ein Verzögerungsmittel (4A) zugeordnet ist, um die Unterbrechung des durch die Kontrollkette fließenden Stroms nach dem Abbruch der Zuführung der Ladung zu der Batterie durch das Ladegerät um eine bestimmte Zeit zu verzögern.

6. Verwaltungssystem nach einem der Ansprüche 4 und 5, wobei die gemeinsame Kontrollschnittstelle ermöglicht vorzusteuern und zu diesem Zweck eine Vorrichtung zur Messung der Zeit aufweist, um eine stufenweise Umschaltung der Spannung zu steuern, die der Batterie durch die Ladevorrichtung zugeführt wird, wobei diese Spannung stufenweise inkrementiert wird, wenn die gemeinsame Schnittstelle den in der Kontrollkette fließenden Strom empfängt, und mit einem vorzugsweise schnelleren Rhythmus stufenweise dekrementiert wird, wenn der in der Kontrollkette fließende Strom unterbrochen ist.

## Claims

1. A method of balancing for an electrical battery (1) comprising a plurality of cells (5) connected in series and which are charged by means of a charging device (2), under the control of a management system associating an individual current shunt circuit (6) in parallel with each cell, which method comprises the steps of:
a) charging the battery by the charging device;
b) activation of the individual current shunt circuit when the voltage across a cell to which the shunt circuit is associated exceeds a common minimum balancing threshold value (V1) for all cells, otherwise, continuation of the charging without activation of the current shunt circuit;
c) interruption of the charging when the voltage of a cell reaches a maximum threshold value (V2) chosen less than or at most equal to a maximum voltage (Vm) permissible at the terminals of the cell, the voltage values V2 and Vm being set according to the nature of the cell and further continuation of activation of the individual current shunt circuit of step b);
said method being **characterized in that** from the moment the battery is no longer supplied by the charging device for a time greater than a determined time delay value (T), the method providing for a substitution of the minimum balancing threshold value (V1) by a higher balancing threshold voltage (V1') and activation of the individual current shunt circuit when the voltage across a cell is greater than said balancing threshold voltage value (V1'), so as to ensure balancing only for the most highly-charged battery cells and avoiding unproductively reducing the charge of the other cells.

2. The balancing method according to claim 1 wherein said battery management system includes a control chain for continuously supplying a binary signal consisting of a current flowing between said terminals of said battery via a series of transmission control gates (13), each gate being assigned to a respective cell and each commanded to interrupt the flow of current in said control chain if the voltage at said terminals of said cell to which it is assigned exceeds a maximum voltage threshold value (V2), any interruption of said current is reflected in a switching control signal sent to said charging device via a common control interface (7), said balancing method being **characterized in that** a higher balancing threshold voltage (V1') is substituted for said minimum balancing threshold voltage (V1) in response to interruption of the current flowing in said control chain for a time greater than a time-delay of a determined value (T).

3. The balancing method according to claim 2 wherein the time for which said current flows in said control chain is measured to command incrementing of the voltage supplied to said battery by said charging device by predetermined steps and the time elapsed after an interruption of said current is measured to command decrementing of the voltage supplied by said charging device by predetermined steps.

4. A battery management system for an arrangement for charging and balancing a battery comprising rechargeable cells (5) connected in series and adapted to be supplied with power by a charging device (2) adapted to provide at least one constant regulation voltage for charging said battery, when the following are associated with said battery (1):
- an individual interface (6) for each battery cell, said interface including:
▪ a first voltage measuring circuit (8) connected to said terminals of said cell to command a current shunt (10, 11) connected in parallel therewith, for shunting at least a portion of the charging current that is supplied to it if the voltage measured at the terminals of said cell rises above a balancing minimum threshold value (V1);
▪ a second voltage measuring circuit (12) for determining if a maximum threshold value (V2) is exceeded at said terminals of said cell from a voltage measured across a measuring resistor (9) in series with said shunt of said interface between the terminals of said cell;
▪ a circuit constituting a transmission control gates (13), performing a logic AND function, producing a binary combination of a signal received by said interface at an input terminal (E1) and a signal produced by said second measuring circuit of said interface to produce a resultant binary signal at an output terminal (E2) of said interface said signal corresponding to a current if said received signal is itself such a current and the voltage measured by said second measuring circuit is less than said maximum threshold value (V2) ;
- a common interface (7) at the output of a control chain and connected to one end terminal of said battery via series-connected transmission gates (13) of said individual interfaces, to operate on said charging device in the event of interruption of the resulting current which is sent via said transmission control gates of said individual interfaces if at least one voltage measured at said terminals of said cells of said battery exceeds said maximum threshold value (V2) and said control chain is interrupted for this reason or any other reason;
said arrangement being **characterized in that** it includes a switching unit (4) between an end terminal of said battery and an input terminal (D1) of said individual interface situated at the head of said control chain and assigned to said cell (5) connected to said end terminal, for interrupting the resulting current that flows through said control chain, and a first measuring circuit (8) at each individual interface which includes means for substituting a balancing threshold value (V1') higher than said minimum balancing threshold value (V1) if the current flowing between said battery terminals via said control chain is interrupted.

5. The battery management system according to claim 4 wherein time-delay means (4A) are associated with said switching member (4) in order to delay the interruption of said current flowing through said control chain for a predetermined time after said charging device stops supplying charge to said battery.

6. The battery management system according to one of claims 4 and 5, wherein said common control interface performs a controlling function and includes for this purpose a time counter for commanding stepwise switching of the voltage supplied by said charging device to said battery, which voltage is incremented in steps if said common interface receives the current flowing in said control chain, and is decremented in steps, preferably at a faster rate, if the current flowing in said control chain is interrupted.
